# EUROPÄISCHE PATENTANMELDUNG

(11) **EP 3 210 727 A1**
(43) Veröffentlichungstag der Anmeldung: **30.08.2017**
(21) Anmeldenummer: 17157436.1
(22) Anmeldetag: 22.02.2017
(51) Int. Cl.: B25F 5/00, B27G 19/08, B27B 9/02

(54) **WERKZEUGMASCHINENVORRICHTUNG**

(30) Priorität: 23.02.2016 DE 102016103152
(71) Anmelder: Berhalter, Eberhard, 88069 Tettnang (DE)
(72) Erfinder: Berhalter, Eberhard, 88069 Tettnang (DE)
(74) Vertreter: Daub, Thomas

(57) **Zusammenfassung**

Die Erfindung geht aus von einer Werkzeugmaschinenvorrichtung, insbesondere von einer Handwerkzeugmaschinenvorrichtung, zu einer Unterstützung einer Bewegung, insbesondere einer Hubbewegung, einer Werkzeugeinheit (12a; 12b) einer Werkzeugmaschine (14a; 14b) relativ zu einer Auflageeinheit (16a; 16b) der Werkzeugmaschine (14a; 14b), mit zumindest einer Führungseinheit (18a; 18b), insbesondere einer Linearführungseinheit, zu einer Führung der Werkzeugeinheit (12a; 12b) bei einer Bewegung relativ zur Auflageeinheit (16a; 16b).

Es wird vorgeschlagen, dass die Werkzeugmaschinenvorrichtung zumindest eine Übersetzungseinheit (20a; 20b) umfasst, die dazu vorgesehen ist, zumindest in Abhängigkeit von einer Bewegungsstrecke der Werkzeugeinheit (12a; 12b) relativ zur Auflageeinheit (16a; 16b) zumindest eine Kraftübersetzung zu ändern.

## Beschreibung

### Stand der Technik

Die Erfindung betrifft eine Werkzeugmaschinenvorrichtung nach dem Oberbegriff des Anspruchs 1.

Aus DE 196 35 527 A1 ist bereits eine Werkzeugmaschinenvorrichtung zu einer Unterstützung einer Bewegung einer Werkzeugeinheit einer Werkzeugmaschine relativ zu einer Auflageeinheit der Werkzeugmaschine bekannt, wobei die Werkzeugmaschinenvorrichtung zumindest eine Führungseinheit zu einer Führung der Werkzeugeinheit bei einer Bewegung relativ zur Auflageeinheit umfasst.

Die Aufgabe der Erfindung besteht insbesondere darin, eine gattungsgemäße Werkzeugmaschinenvorrichtung mit einer vorteilhaften Bedienerunterstützung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Werkzeugmaschinenvorrichtung, insbesondere von einer Handwerkzeugmaschinenvorrichtung, zu einer Unterstützung einer Bewegung, insbesondere einer Hubbewegung, einer Werkzeugeinheit einer Werkzeugmaschine, insbesondere einer tragbaren Werkzeugmaschine, relativ zu einer Auflageeinheit der Werkzeugmaschine, mit zumindest einer Führungseinheit, insbesondere einer Linearführungseinheit, zu einer Führung der Werkzeugeinheit bei einer Bewegung relativ zur Auflageeinheit.

Es wird vorgeschlagen, dass die Werkzeugmaschinenvorrichtung zumindest eine Übersetzungseinheit umfasst, die dazu vorgesehen ist, zumindest in Abhängigkeit von einer Bewegungsstrecke der Werkzeugeinheit relativ zur Auflageeinheit zumindest eine Kraftübersetzung zu ändern. Unter einer "Übersetzungseinheit" soll hier insbesondere eine Einheit verstanden werden, die dazu vorgesehen ist, zumindest einen Wert einer physikalischen Größe in einen anderen Wert derselben physikalischen Größe zu ändern. Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Die Übersetzungseinheit ist vorzugsweise als Kraftübersetzungseinheit ausgebildet. Bevorzugt ist die Übersetzungseinheit dazu vorgesehen, einen Betrag einer Haltekraft zu einem Halten der Werkzeugeinheit in zumindest einer Position relativ zur Auflageeinheit und/oder zumindest einer Betätigungskraft zu einer Bewegung der Werkzeugeinheit relativ zur Auflageeinheit zu übersetzen. Vorzugsweise ist die Bewegung, insbesondere die Hubbewegung, der Werkzeugeinheit relativ zur Auflageeinheit verschieden von einer Antriebsbewegung der Werkzeugeinheit zu einem reinen Antrieb eines an der Werkzeugeinheit angeordneten Einsatzwerkzeugs. Die Bewegung der Werkzeugeinheit relativ zur Auflageeinheit ist vorzugsweise eine Eintauchbewegung oder eine Aufwärtshubbewegung. Eine Eintauchbewegung der Werkzeugeinheit relativ zur Auflageeinheit ist insbesondere dazu vorgesehen, ein an der Werkzeugeinheit angeordnetes Einsatzwerkzeug zu einer Bearbeitung eines Werkstücks in das Werkstück einzutauchen. Eine Aufwärtshubbewegung der Werkzeugeinheit relativ zur Auflageeinheit ist insbesondere dazu vorgesehen, das an der Werkzeugeinheit angeordnete Einsatzwerkzeug aus dem Werkstück heraus zu bewegen.

Der Begriff "Werkzeugeinheit" soll hier insbesondere eine Einheit definieren, die zu einer Aufnahme, zu einer Fixierung und/oder zu einem Antrieb eines Einsatzwerkzeugs vorgesehen ist. Die Werkzeugeinheit umfasst vorzugsweise zumindest eine Werkzeugaufnahme zu einer Aufnahme und/oder zu einer Fixierung eines Einsatzwerkzeugs. Die Werkzeugeinheit ist vorzugsweise mittels einer Antriebseinheit der Werkzeugmaschine und/oder einer Abtriebseinheit, insbesondere einer Getriebeeinheit, der Werkzeugmaschine antreibbar. Bevorzugt ist die Werkzeugeinheit an einer Gehäuseeinheit der Werkzeugmaschine angeordnet. Vorzugsweise ist die Werkzeugeinheit, insbesondere die Werkzeugaufnahme, zumindest teilweise in der Gehäuseeinheit der Werkzeugmaschine gelagert, insbesondere drehbar gelagert. Bevorzugt ist die Werkzeugeinheit zumindest zusammen mit der Gehäuseeinheit relativ zur Auflageeinheit beweglich gelagert.

Unter einer "Auflageeinheit" soll hier insbesondere eine Einheit verstanden werden, die während einer Bearbeitung eines Werkstücks mittels der Werkzeugmaschine zumindest teilweise auf dem Werkstück aufliegt, insbesondere mit einer Auflagefläche der Auflageeinheit oder mit zumindest einem Wälzelement der Auflageeinheit. Besonders bevorzugt ist die Auflageeinheit als Gleitschuh und/oder als Grundplatte ausgebildet. Die Auflageeinheit kann zumindest ein Wälzelement und/oder zumindest ein Gleitelement aufweisen. Vorzugsweise ist das zumindest eine Wälzelement dazu vorgesehen, während einer Auflage der Auflageeinheit auf dem Werkstück auf einer Werkstückoberfläche des Werkstücks zu wälzen. Insbesondere ist das zumindest eine Gleitelement dazu vorgesehen, während einer Auflage der Auflageeinheit auf dem Werkstück auf einer Werkstückoberfläche des Werkstücks zu gleiten. Die Auflageeinheit kann beispielsweise ein als beschichtete Auflagefläche ausgebildetes Gleitelement aufweisen, das dazu vorgesehen ist, während einer Bearbeitung eines Werkstücks mittels der Werkzeugmaschine auf einer Werkstückoberfläche des Werkstücks zu gleiten. Weitere, einem Fachmann als sinnvoll erscheinende Ausgestaltungen der Auflageeinheit sind ebenfalls denkbar.

Der Begriff "Führungseinheit" soll hier insbesondere eine Einheit definieren, die dazu vorgesehen ist, zumindest die Werkzeugeinheit bei einer Bewegung relativ zur Auflageeinheit mittels einer Einwirkung von zumindest einer Zwangskraft entlang einer vorgegebenen Bahn zu führen. Der Ausdruck "Zwangskraft" soll hier insbesondere eine Kraft definieren, die dazu vorgesehen ist, einen Körper an einer Bewegung in zumindest eine Richtung zu hindern und/oder den Körper bei einer Bewegung auf einer mittels einer Einwirkung der Kraft auf den Körper vorgegebenen Bahn zu halten. Die Führungseinheit ist vorzugsweise als Linearführungseinheit ausgebildet. Es ist jedoch auch denkbar, dass die Führungseinheit eine andere, einem Fachmann als sinnvoll erscheinende Ausgestaltung aufweist, wie beispielsweise eine Ausgestaltung als eine Translationsführungseinheit o. dgl.

Mittels der erfindungsgemäßen Ausgestaltung kann eine vorteilhafte Bedienerunterstützung erreicht werden. Es kann vorteilhaft mittels einer Einwirkung einer geringen Haltekraft ein Halten der Werkzeugeinheit in einer Position relativ zur Auflageeinheit ermöglicht werden, insbesondere in einer maximalen Hubposition der Werkzeugeinheit relativ zur Auflageeinheit. Es kann vorteilhaft eine bauteilsparende Ausgestaltung der Werkzeugmaschinenvorrichtung ermöglicht werden, da beispielsweise mittels eines einzelnen Federelements eine zumindest teilweise selbsttätige Bewegung der Werkzeugeinheit in eine maximalen Hubposition der Werkzeugeinheit relativ zur Auflageeinheit ermöglicht werden kann, wobei das Federelement vorteilhafterweise lediglich eine geringe maximale Federkraft aufweist.

Des Weiteren wird vorgeschlagen, dass die Übersetzungseinheit zumindest ein beweglich gelagertes Hebelelement aufweist, das dazu vorgesehen ist, zumindest in Abhängigkeit von einer Bewegungsstrecke der Werkzeugeinheit relativ zur Auflageeinheit zumindest eine Kraftübersetzung zu ändern. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke größer als 5 mm, bevorzugt größer als 10 mm und besonders bevorzugt größer als 20 mm aufweist und/oder eine Bewegungsmöglichkeit um zumindest eine Achse um einen Winkel größer als 5°, bevorzugt größer als 10° und besonders bevorzugt größer als 15° aufweist. Vorzugsweise ist das Hebelelement derart beweglich gelagert, ausgebildet oder angeordnet, dass eine wirksame Hebellänge des Hebelelements zumindest in Abhängigkeit von einer Bewegungsstrecke der Werkzeugeinheit relativ zur Auflageeinheit veränderbar ist, um eine Kraftübersetzung zu ändern. Das Hebelelement kann Teil eines Kniehebelmechanismus sein, das Hebelelement kann Teil eines Exzenterelements sein oder das Hebelelement kann auf eine andere, einem Fachmann als sinnvoll erscheinende Art und Weise ausgebildet sein. Mittels der erfindungsgemäßen Ausgestaltung kann konstruktiv einfach eine Kraftübersetzung in Abhängigkeit von einer Bewegungsstrecke der Werkzeugeinheit relativ zur Auflageeinheit erreicht werden. Es kann vorteilhaft unter Anwendung eines Hebelprinzips eine geringe Betätigungskraft zur Erzeugung einer großen Hubkraft erreicht werden.

Ferner wird vorgeschlagen, dass die Übersetzungseinheit zumindest zwei beweglich gelagerte Hebelelemente aufweist, die zumindest eine gemeinsame Bewegungsachse aufweisen. Vorzugsweise verläuft die gemeinsame Bewegungsachse der zumindest zwei Hebelelemente zumindest im Wesentlichen quer, insbesondere zumindest im Wesentlichen senkrecht, zu einer Führungsachse der Führungseinheit. Die Führungsachse der Führungseinheit verläuft bevorzugt zumindest im Wesentlichen quer, insbesondere zumindest im Wesentlichen senkrecht, zur Auflagefläche der Auflageeinheit. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt ist die gemeinsame Bewegungsachse als Drehachse oder Schwenkachse ausgebildet. Vorzugsweise sind die zumindest zwei beweglich gelagerten Hebelelemente um die gemeinsame Bewegungsachse drehbar oder schwenkbar gelagert. Mittels der erfindungsgemäßen Ausgestaltung kann vorteilhaft eine Last- und/oder Kraftaufteilung auf die zumindest zwei Hebelelemente zu einer Bewegung der Werkzeugeinheit erreicht werden.

Zudem wird vorgeschlagen, dass die Übersetzungseinheit zumindest zwei Hebelelemente aufweist, die unterschiedliche maximale Längserstreckungen aufweisen. Vorzugsweise sind die Hebelelemente jeweils mit einem Ende, das einem jeweiligen Ende der Hebelelemente abgewandt ist, an dem die gemeinsamen Bewegungsachse angeordnet ist, beweglich gelagert. Vorzugsweise ist eines der zumindest zwei Hebelelemente beweglich an der Auflageeinheit gelagert. Insbesondere ist eines der zumindest zwei Hebelelemente beweglich an der Werkzeugeinheit oder an der Gehäuseeinheit gelagert. Vorzugsweise ist eine maximale Längserstreckung eines der zumindest zwei Hebelelemente zumindest mehr als doppelt so lang wie eine maximale Längserstreckung des anderen der zumindest zwei Hebelelemente. Es ist jedoch auch denkbar, dass die zumindest zwei Hebelelemente einer alternativen Ausgestaltung der Übersetzungseinheit jeweils eine maximale Längserstreckung aufweisen, die gleich groß sind. Vorzugsweise entspricht eine maximale Längserstreckung eines Hebelelements einem maximalen Abstand von zwei einander abgewandten Enden des Hebelelements oder einem maximalen Abstand zwischen zwei Lagerpunkten des Hebelelements, insbesondere betrachtet entlang einer Längsachse des Hebelelements. Mittels der erfindungsgemäßen Ausgestaltung kann vorteilhaft eine einstellbare Kraftübersetzung erreicht werden, die insbesondere vorteilhaft an unterschiedliche Einsatzgebiete anpassbar ist.

Des Weiteren wird vorgeschlagen, dass die Übersetzungseinheit zumindest ein Hebelelement aufweist, das von einem exzentrisch an einem Drehelement der Übersetzungseinheit angeordneten Fortsatz gebildet ist. Der Fortsatz ist vorzugsweise exzentrisch zu einer Drehachse des Drehelements am Drehelement angeordnet. Vorzugsweise ist eine wirksame Hebellänge des Hebelelements in Abhängigkeit von einer Drehstellung des Drehelements um die Drehachse veränderbar. Der Fortsatz ist insbesondere dazu vorgesehen, in eine korrespondierende Ausnehmung einzugreifen, um eine Bewegung der Werkzeugeinheit relativ zur Auflageeinheit zu ermöglichen. Die Ausnehmung kann als Nut, als durchgehende Öffnung, insbesondere als schlitzförmige Öffnung, oder als eine andere, einem Fachmann als sinnvoll erscheinende Ausnehmung ausgebildet sein. Die Ausnehmung kann an der Werkzeugeinheit, der Gehäuseeinheit oder der Führungseinheit, die zumindest teilweise an der Auflageeinheit fixiert ist, angeordnet sein. Das Drehelement kann drehbar an der Werkzeugeinheit, der Gehäuseeinheit oder der Führungseinheit, die zumindest teilweise an der Auflageeinheit fixiert ist, angeordnet sein, insbesondere je nach Anordnung der Ausnehmung. Mittels der erfindungsgemäßen Ausgestaltung kann vorteilhaft eine kompakte Übersetzungseinheit realisiert werden. Insbesondere kann vorteilhaft eine robuste Übersetzungseinheit realisiert werden.

Ferner wird vorgeschlagen, dass die Übersetzungseinheit zumindest ein beweglich gelagertes Drehelement aufweist, das eine umfänglich verlaufende Führungsbahn zur Führung eines Federelements der Übersetzungseinheit aufweist. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Vorzugsweise ist das Drehelement als Scheibe ausgebildet. Insbesondere ist an dem Drehelement das als Fortsatz ausgebildete Hebelelement angeordnet. Bevorzugt weist das Drehelement eine zumindest im Wesentlichen vollständig umlaufende Nut auf, die zu einer zumindest teilweisen Aufnahme des Federelements vorgesehen ist. Unter "zumindest im Wesentlichen vollständig umlaufend" soll hier insbesondere eine Erstreckung der Nut entlang einer Umfangsrichtung des Drehelements verstanden werden, die insbesondere zumindest mehr als 50 %, bevorzugt zumindest mehr als 70 % und besonders bevorzugt mehr als 80 % einer Gesamtumfangserstreckung des Drehelements entlang der Umfangsrichtung entspricht. Die Umfangsrichtung des Drehelements verläuft vorzugsweise in einer Ebene, die sich zumindest im Wesentlichen senkrecht zu einer Drehachse des Drehelements erstreckt. Mittels der erfindungsgemäßen Ausgestaltung kann vorteilhaft eine zuverlässige Führung und/oder Aufnahme des Federelements während einer Bewegung des Drehelements erreicht werden. Es kann vorteilhaft ein Verklemmen der Übersetzungseinheit weitestgehend verhindert werden.

Zudem wird vorgeschlagen, dass die Übersetzungseinheit zumindest ein Federelement aufweist, das dazu vorgesehen ist, zumindest ein Hebelelement der Übersetzungseinheit mit einer Federkraft zu beaufschlagen. Das Federelement kann als Druckfeder oder als Zugfeder ausgebildet sein. Es ist auch denkbar, dass die Übersetzungseinheit eine von eins abweichende Anzahl an Federelementen umfasst, die eine analoge Ausgestaltung aufweisen oder die unterschiedlich ausgestaltet sind. Vorzugsweise ist das Federelement als Schraubendruckfeder, als Schraubenzugfeder o. dgl. ausgebildet. Es ist jedoch auch denkbar, dass das Federelement als Tellerfeder, als Blattfeder, als Evolutfeder, als Spiralfeder, als Schenkelfeder o. dgl. ausgebildet ist. Mittels der erfindungsgemäßen Ausgestaltung kann vorteilhaft eine zumindest teilweise automatische Rückstellung der Werkzeugeinheit in eine Ausgangsposition relativ zur Auflageeinheit erreicht werden.

Des Weiteren wird vorgeschlagen, dass das Federelement eine lineare oder eine progressive Federkennlinie aufweist. Es kann vorteilhaft eine Anpassung einer Federkraftwirkung an eine Auslegung der Übersetzungseinheit erreicht werden.

Ferner wird vorgeschlagen, dass das Federelement in zumindest einem Zustand zumindest teilweise einen Außenumfang eines beweglich gelagerten Drehelements der Übersetzungseinheit umschlingt. Vorzugsweise ist an dem Drehelement das als exzentrisch am Drehelement angeordneter Fortsatz ausgebildete Hebelelement angeordnet. Vorzugsweise verläuft der Außenumfang entlang der Umfangsrichtung des Drehelements. Die Ausnehmung des Drehelements ist vorzugsweise am Außenumfang angeordnet. Mittels der erfindungsgemäßen Ausgestaltung kann vorteilhaft eine zuverlässige Führung und/oder Aufnahme des Federelements erreicht werden.

Zudem wird vorgeschlagen, dass die Übersetzungseinheit als Kniehebeleinheit oder als Exzentereinheit ausgebildet ist. Bei einer Ausgestaltung der Übersetzungseinheit als Exzentereinheit ist es denkbar, dass die Exzentereinheit ein exzentrisch an einem Drehelement angeordnetes Hebelelement aufweist, dass die Exzentereinheit ein Drehelement aufweist, das eine spiralförmige Federführungsbahn aufweist, in der ein Federelement der Exzentereinheit bei einer Bewegung des Drehelements geführt wird, insbesondere auf- oder abgewickelt wird, dass die Exzentereinheit derart ausgebildet ist, dass ein Federelement der Exzentereinheit auf ein Drehelement der Exzentereinheit wickelbar ist, wobei in Abhängigkeit von einer Wicklungskenngröße (Wicklungsanzahl o. dgl.) ein Umfang des Drehelements veränderbar ist, was insbesondere eine wirksame Hebellänge eines Hebelelements der Exzentereinheit verändert, dass die Exzentereinheit ein exzentrisch gelagertes Drehelement aufweist, auf das ein Federelement der Exzentereinheit wickelbar ist, oder dass die Exzentereinheit eine andere, einem Fachmann als sinnvoll erscheinende Ausgestaltung aufweist. Es kann konstruktiv einfach eine Bedienerunterstützung bei einer Bewegung der Werkzeugeinheit relativ zur Auflageeinheit realisiert werden.

Des Weiteren wird eine Werkzeugmaschine, insbesondere eine tragbare Werkzeugmaschine, vorgeschlagen, die zumindest eine Werkzeugeinheit, zumindest eine Auflageeinheit und zumindest eine erfindungsgemäße Werkzeugmaschinenvorrichtung umfasst. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Die Werkzeugmaschine, insbesondere die tragbare Werkzeugmaschine, kann als Kreissäge, als Tauchkreissäge, als Oberfräse, als Schlitzfräse oder als andere, einem Fachmann als sinnvolle erscheinende Werkzeugmaschine, insbesondere tragbare Werkzeugmaschine, ausgebildet sein. Mittels der erfindungsgemäßen Ausgestaltung kann vorteilhaft eine Werkzeugmaschine mit einem hohen Bedienerkomfort zur Verfügung gestellt werden.

Die erfindungsgemäße Werkzeugmaschinenvorrichtung und/oder die erfindungsgemäße Werkzeugmaschine sollen/soll hierbei nicht auf die oben beschriebene Anwendung und Ausführungsform beschränkt sein. Insbesondere kann die erfindungsgemäße Werkzeugmaschinenvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenvorrichtung in einer schematischen Darstellung,
- Fig. 2: eine weitere Ansicht der erfindungsgemäßen Werkzeugmaschine in einer schematischen Darstellung,
- Fig. 3: eine Detailansicht einer Übersetzungseinheit der erfindungsgemäßen Werkzeugmaschinenvorrichtung, wobei ein Teil einer Schutzhaubeneinheit der Werkzeugmaschine abgenommen ist, in einer schematischen Darstellung,
- Fig. 4: eine weitere Detailansicht der Übersetzungseinheit in einer schematischen Darstellung,
- Fig. 5: eine Detailansicht eines an einem Schutzhaubenelement einer Schutzhaubeneinheit der erfindungsgemäßen Werkzeugmaschine angeordneten Anlageelements in einer schematischen Darstellung,
- Fig. 6: eine Detailansicht einer Lagereinheit der erfindungsgemäßen Werkzeugmaschine zu einer beweglichen Lagerung des Schutzhaubenelements in einer schematischen Darstellung,
- Fig. 7: eine Detailansicht des Schutzhaubenelements, an dem das Anlageelement angeordnet ist, in einer schematischen Darstellung,
- Fig. 8: eine alternative erfindungsgemäße Werkzeugmaschine mit einer alternativen erfindungsgemäßen Werkzeugmaschinenvorrichtung in einer schematischen Darstellung und
- Fig. 9: eine Detailansicht der alternativen erfindungsgemäßen Werkzeugmaschinenvorrichtung in einer schematischen Darstellung.

### Beschreibung der Ausführungsbeispiele

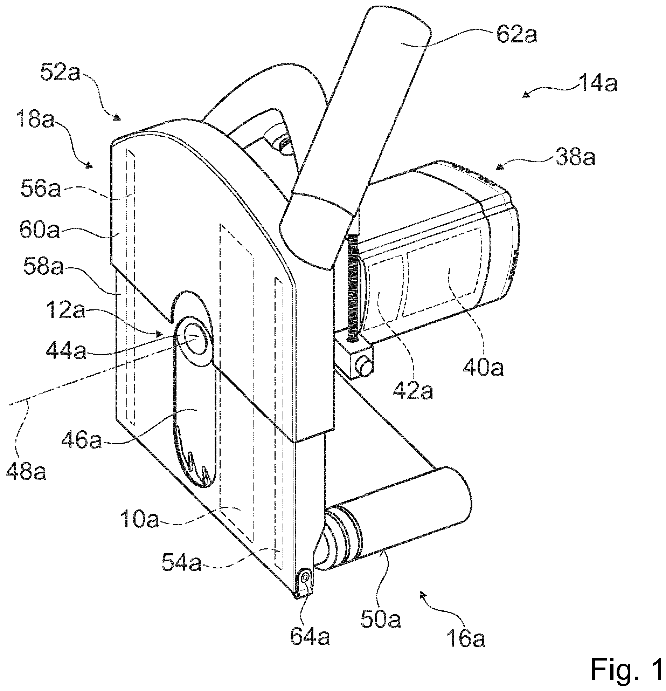

Fig. 1 zeigt eine Werkzeugmaschine 14a, die zumindest eine Werkzeugeinheit 12a, zumindest eine Auflageeinheit 16a und zumindest eine Werkzeugmaschinenvorrichtung 10a umfasst. Die Werkzeugmaschine 14a ist als tragbare Werkzeugmaschine ausgebildet. Die Werkzeugmaschine 14a ist in dem in Figur 1 gezeigten Ausführungsbeispiel als Handkreissäge, insbesondere Tauchhandkreissäge, ausgebildet. Es ist jedoch auch denkbar, dass die Werkzeugmaschine 14a eine andere, einem Fachmann als sinnvoll erscheinende Ausgestaltung aufweist, wie beispielsweise eine Ausgestaltung als Oberfräse, als Schlitzfräse o. dgl. Die Werkzeugmaschine 14a weist eine Gehäuseeinheit 38a auf. Die Gehäuseeinheit 38a ist dazu vorgesehen, zumindest eine Antriebseinheit 40a der Werkzeugmaschine 14a aufzunehmen und/oder zu lagern. Die Gehäuseeinheit 38a kann als Kunststoffgehäuseeinheit, als Metallgehäuseeinheit, als Topfgehäuseeinheit, als Schalengehäuseeinheit, als Kombination aus einer der genannten Gehäuseeinheiten oder als eine andere, einem Fachmann als sinnvoll erscheinende Gehäuseeinheit ausgebildet sein. Die Gehäuseeinheit 38a ist, insbesondere translatorisch, beweglich an der Auflageeinheit 16a gelagert, insbesondere zumindest zusammen mit der Werkzeugeinheit 12a und/oder zumindest zusammen mit der Antriebseinheit 40a.

Die Antriebseinheit 40a ist insbesondere als Elektromotoreinheit ausgebildet. Es ist jedoch auch denkbar, dass die Antriebseinheit 40a eine andere, einem Fachmann als sinnvoll erscheinende Ausgestaltung aufweist, wie beispielsweise eine Ausgestaltung als Hybridantriebseinheit, als Verbrennungsantriebseinheit o. dgl. Die Werkzeugmaschine 14a umfasst zumindest eine Getriebeeinheit 42a. Die Getriebeeinheit 42a ist in der Gehäuseeinheit 38a angeordnet, insbesondere gelagert. Die Antriebseinheit 40a und die Getriebeeinheit 42a sind vorzugsweise dazu vorgesehen, auf eine, einem Fachmann bereits bekannte Art und Weise die Werkzeugeinheit 12a, insbesondere eine Werkzeugaufnahme 44a der Werkzeugeinheit 12a, anzutreiben, insbesondere rotierend anzutreiben. Es ist jedoch auch denkbar, dass die Werkzeugmaschine 14a in einer alternativen Ausgestaltung entkoppelt von der Getriebeeinheit 42a ausgebildet ist und die Werkzeugeinheit 12a im Wesentlichen direkt mittels der Antriebseinheit 40a antreibbar ist.

Die Werkzeugeinheit 12a umfasst vorzugsweise zumindest die Werkzeugaufnahme 44a zu einer Aufnahme und/oder zu einer Fixierung eines Einsatzwerkzeugs 46a. Das Einsatzwerkzeug 46a ist in dem in Figur 1 dargestellten Ausführungsbeispiel als Sägeblatt, insbesondere als Kreissägeblatt, ausgebildet. Die Werkzeugaufnahme 44a ist drehbar gelagert, insbesondere in der Gehäuseeinheit 38a. Die Werkzeugaufnahme 44a weist bevorzugt zu einer Aufnahme und/oder zu einer Fixierung des Einsatzwerkzeugs 46a eine, einem Fachmann bereits bekannte Ausgestaltung auf, wie beispielsweise eine Ausgestaltung als Spannzange, als Werkzeugfutter, als Schraubverbindung, als Schnellwechselfutter o. dgl. Eine Rotationsachse 48a der Werkzeugaufnahme 44a verläuft insbesondere zumindest im Wesentlichen parallel zu einer Auflagefläche 50a der Auflageeinheit 16a. Die Auflageeinheit 16a liegt zumindest in einem Betriebszustand mit der Auflagefläche 50a der Auflageeinheit 16a auf einem zu bearbeitenden Werkstück auf. Die Auflageeinheit 16a ist vorzugsweise als Gleitschuh und/oder als Grundplatte ausgebildet.

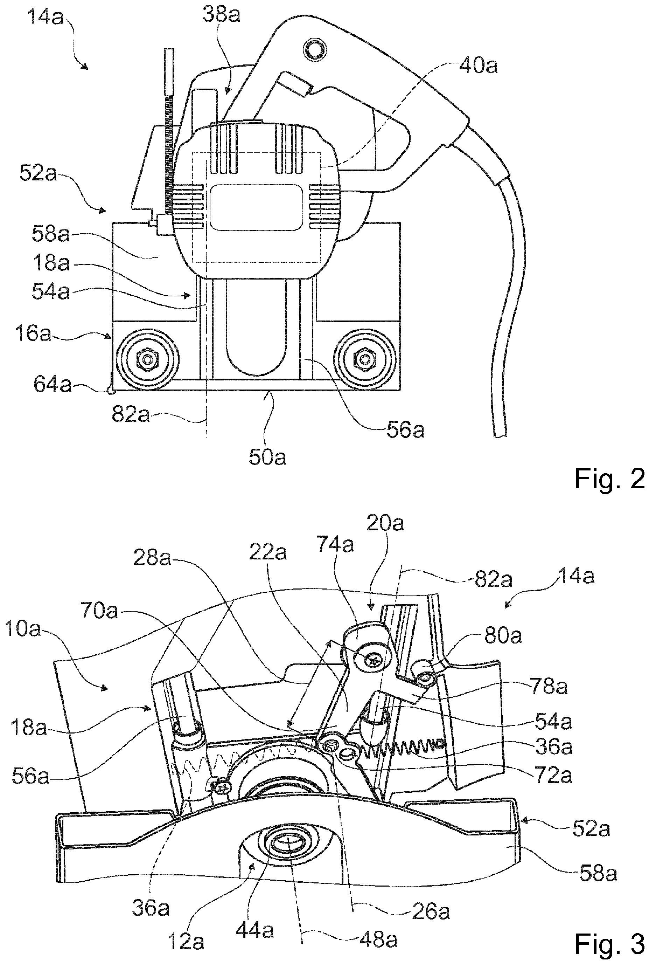

Die Werkzeugmaschinenvorrichtung 10a ist vorzugsweise zumindest teilweise an der Auflageeinheit 16a angeordnet (Figur 2). Die Werkzeugmaschinenvorrichtung 10a ist insbesondere als Handwerkzeugmaschinenvorrichtung ausgebildet. Die Werkzeugmaschinenvorrichtung 10a ist zu einer Unterstützung einer Bewegung, insbesondere einer Hubbewegung, der Werkzeugeinheit 12a der Werkzeugmaschine 14a relativ zur Auflageeinheit 16a der Werkzeugmaschine 14a vorgesehen. Die Werkzeugmaschinenvorrichtung 10a umfasst zumindest eine Führungseinheit 18a, insbesondere eine Linearführungseinheit, zu einer Führung der Werkzeugeinheit 12a bei einer Bewegung relativ zur Auflageeinheit 16a. Die Führungseinheit 18a umfasst zumindest ein Führungselement 54a, 56a (Figuren 2 und 3). Das zumindest eine Führungselement 54a, 56a ist als Linearführungselement ausgebildet, insbesondere als Führungsstange. Das zumindest eine Führungselement 54a, 56a ist mit zumindest einem Ende an der Auflageeinheit 16a angeordnet, insbesondere fixiert. Das zumindest eine Führungselement 54a, 56a ist mit zumindest einem weiteren Ende in einer Ausnehmung der Gehäuseeinheit 38a angeordnet. Die Gehäuseeinheit 38a ist vorzugsweise entlang des zumindest einen Führungselements 54a, 56a translatorisch relativ zur Auflageeinheit 16a beweglich gelagert. Vorzugsweise umfasst die Führungseinheit 18a zumindest zwei Führungselemente 54a, 56a, die eine zumindest im Wesentlichen analoge Ausgestaltung aufweisen. Es ist jedoch auch denkbar, dass die Führungseinheit 18a eine von zwei abweichende Anzahl an Führungselementen 54a, 56a aufweist. Zumindest eine Führungsachse 82a der Führungseinheit 18a, insbesondere zumindest eines der Führungselemente 54a, 56a, verläuft vorzugsweise zumindest im Wesentlichen senkrecht zur Auflagefläche 50a der Auflageeinheit 16a.

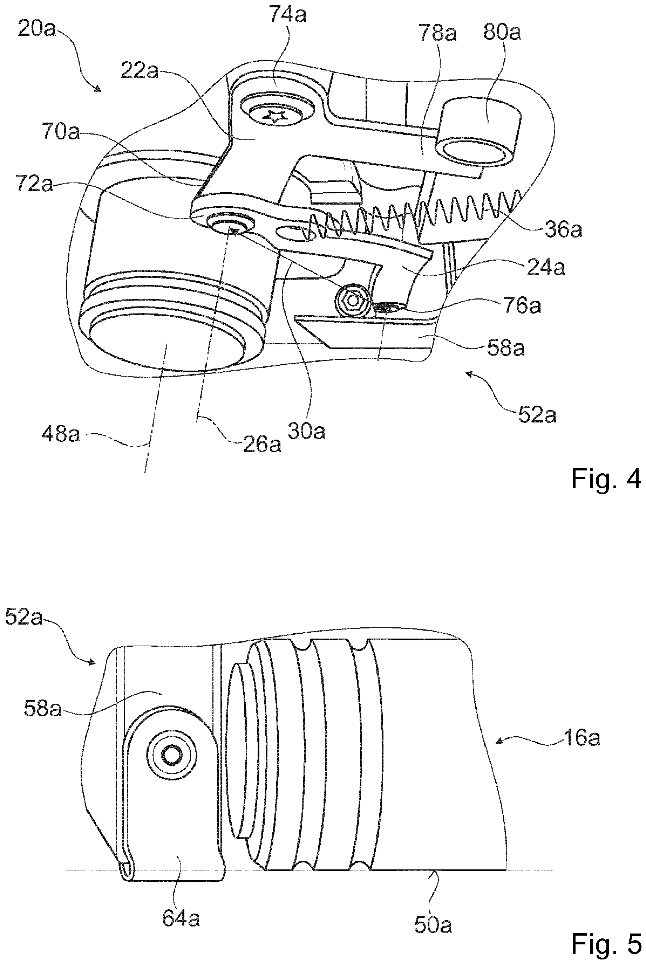

Die Werkzeugmaschinenvorrichtung 10a umfasst zumindest eine Übersetzungseinheit 20a, die dazu vorgesehen ist, zumindest in Abhängigkeit von einer Bewegungsstrecke der Werkzeugeinheit 12a relativ zur Auflageeinheit 16a zumindest eine Kraftübersetzung zu ändern (Figuren 1 bis 4). Die Übersetzungseinheit 20a weist zumindest ein beweglich gelagertes Hebelelement 22a, 24a auf, das dazu vorgesehen ist, zumindest in Abhängigkeit von einer Bewegungsstrecke der Werkzeugeinheit 12a relativ zur Auflageeinheit 16a zumindest eine Kraftübersetzung zu ändern. Vorzugsweise umfasst die Übersetzungseinheit 20a zumindest zwei beweglich gelagerte Hebelelemente 22a, 24a, die zumindest eine gemeinsame Bewegungsachse 26a aufweisen (Figuren 3 und 4). Die Bewegungsachse 26a verläuft insbesondere zumindest im Wesentlichen parallel zur Auflagefläche 50a der Auflageeinheit 16a und/oder zur Rotationsachse 48a der Werkzeugeinheit 12a. Die Bewegungsachse 26a bildet insbesondere eine Schwenkachse, um die die zumindest zwei Hebelelemente 22a, 24a schwenkbar gelagert sind. Die zumindest zwei Hebelelemente 22a, 24a sind insbesondere jeweils mit zumindest einem Ende 70a, 72a schwenkbar miteinander verbunden. Eines der zumindest zwei Hebelelemente 22a, 24a ist mit einem weiteren Ende 74a schwenkbar an der Gehäuseeinheit 38a angeordnet (Figur 3). Eines der zumindest zwei Hebelelemente 22a, 24a ist mit einem weiteren Ende 76a schwenkbar an der Auflageeinheit 16a angeordnet (Figur 4). Das an der Gehäuseeinheit 38a schwenkbar angeordnete Hebelelement 22a weist insbesondere einen Anschlagfortsatz 78a auf, der dazu vorgesehen ist, eine Bewegung, insbesondere eine Schwenkbewegung, des an der Gehäuseeinheit 38a schwenkbar angeordneten Hebelelements 22a zu begrenzen. Der Anschlagfortsatz 78a wirkt zu einer Bewegungsbegrenzung der zumindest zwei Hebelelemente 22a, 24a relativ zueinander mit einem an der Gehäuseeinheit 38a angeordneten Anschlagelement 80a zusammen. Die Übersetzungseinheit 20a ist vorzugsweise als Kniehebeleinheit ausgebildet. Eine Ausgestaltung der Übersetzungseinheit 20a mit mehr als zwei Hebelelementen 22a, 24a zur Bildung einer Kniehebeleinheit ist ebenfalls denkbar.

Die Übersetzungseinheit 20a weist die zumindest zwei Hebelelemente 22a, 24a auf, die unterschiedliche maximale Längserstreckungen 28a, 30a aufweisen (Figuren 3 und 4). Vorzugsweise weist das an der Gehäuseeinheit 38a schwenkbar angeordnete Hebelelement 22a eine geringere maximale Längserstreckung 28a auf als eine maximale Längserstreckung 30a des an der Auflageeinheit 16a schwenkbar angeordneten Hebelelements 24a. Es ist jedoch auch denkbar, dass das an der Auflageeinheit 16a schwenkbar angeordnete Hebelelement 24a eine geringere maximale Längserstreckung 30a aufweist als eine maximale Längserstreckung 28a des an der Gehäuseeinheit 38a schwenkbar angeordneten Hebelelements 22a. Eine Ausgestaltung der zumindest zwei Hebelelemente 22a, 24a mit gleichen maximalen Längserstreckungen 28a, 30a ist ebenfalls denkbar. Die zumindest zwei Hebelelemente 22a, 24a können eine zumindest im Wesentlichen vollständig geradlinige Ausgestaltung, eine abgeknickte Ausgestaltung, eine bogenförmige Ausgestaltung oder eine andere, einem Fachmann als sinnvoll erscheinende Ausgestaltung aufweisen.

Die Übersetzungseinheit 20a weist zumindest ein Federelement 36a auf, das dazu vorgesehen ist, zumindest eines der Hebelelemente 22a, 24a der Übersetzungseinheit 20a mit einer Federkraft zu beaufschlagen (Figur 3). Es ist jedoch auch denkbar, dass die Übersetzungseinheit 20a eine von eins abweichende Anzahl an Federelementen 36a aufweist. Das Federelement 36a ist vorzugsweise dazu vorgesehen, die zumindest zwei Hebelelemente 22a, 24a der Übersetzungseinheit 20a mit einer Federkraft zu beaufschlagen. Das Federelement 36a ist insbesondere mit einem Ende in einem Bereich der gemeinsamen Bewegungsachse 26a an zumindest einem der zumindest zwei Hebelelemente 22a, 24a angeordnet, insbesondere fixiert. Mit einem weiteren Ende ist das Federelement 36a an der Gehäuseeinheit 38a angeordnet, insbesondere fixiert. Das Federelement 36a ist vorzugsweise dazu vorgesehen, die zumindest zwei Hebelelemente 22a, 24a der Übersetzungseinheit 20a mit einer Federkraft entlang einer zumindest im Wesentlichen quer zur Bewegungsachse26a und/oder zumindest im Wesentlichen quer zur Führungsachse 82a verlaufenden Richtung zu beaufschlagen. Das Federelement 36a ist vorzugsweise dazu vorgesehen, die zumindest zwei Hebelelemente 22a, 24a mit einer Federkraft zu beaufschlagen, die eine Bewegung der zumindest zwei Hebelelemente 22a, 24a in eine zumindest im Wesentlichen gestreckte Anordnung der zumindest zwei Hebelelemente 22a, 24a relativ zueinander bewirkt. Das Federelement 36a kann als Druckfeder, als Zugfeder, als Druckzylinder, wie beispielsweise als Gasdruckfeder o. dgl., oder als ein anderes, einem Fachmann als sinnvoll erscheinendes Element ausgebildet sein. Das Federelement 36a ist vorzugsweise als Schraubenzugfeder oder als Schraubendruckfeder ausgebildet. In Figur 3 ist das Federelement 36a beispielhaft als Schraubenzugfeder dargestellt, wobei eine alternative Ausgestaltung des Federelements 36a als Schraubendruckfeder gestrichelt in Figur 3 dargestellt ist. Das Federelement 36a weist eine lineare oder eine progressive Federkennlinie auf.

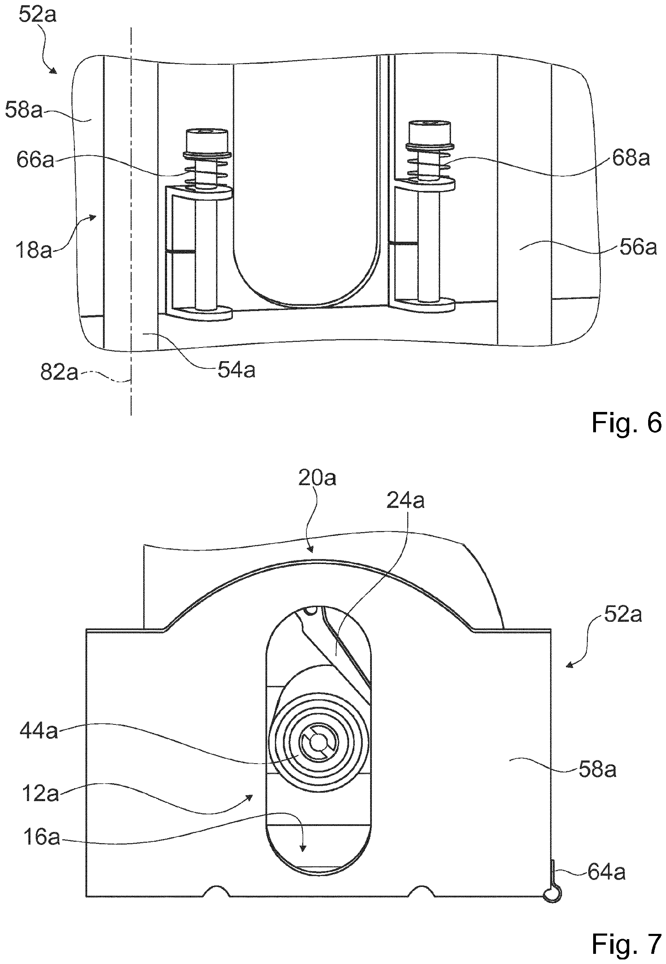

Die Werkzeugmaschine 14a weist eine Schutzhaubeneinheit 52a auf, die zumindest dazu vorgesehen ist, einen Bediener der Werkzeugmaschine 14a bei einer Bearbeitung eines Werkstücks (hier nicht näher dargestellt) vor Verletzungen zu schützen und/oder eine Absaugung von Werkstückpartikeln bei einer Bearbeitung eines Werkstücks zu ermöglichen. Die Schutzhaubeneinheit 52a ist insbesondere zumindest teilweise an der Auflageeinheit 16a angeordnet (Figuren 4, 6 und 7). Die Schutzhaubeneinheit 52a umfasst vorzugsweise zumindest ein, insbesondere translatorisch, beweglich gelagertes Schutzhaubenelement 58a, 60a, das zumindest relativ zur Auflageeinheit 16a beweglich ist (Figur 1). Vorzugsweise umfasst die Schutzhaubeneinheit 52a zumindest ein, insbesondere translatorisch, beweglich an der Auflageeinheit 16a gelagertes Schutzhaubenelement 58a und zumindest ein an der Gehäuseeinheit 38a angeordnetes weiteres Schutzhaubenelement 60a. Das weitere Schutzhaubenelement 60a ist zusammen mit der Gehäuseeinheit 38a relativ zum Schutzhaubenelement 58a beweglich. Das weitere Schutzhaubenelement 60a ist vorzugsweise an der Gehäuseeinheit 38a fixiert. Insbesondere übergreift das weitere Schutzhaubenelement 60a das Schutzhaubenelement 58a. Das Schutzhaubenelement 58a ist insbesondere bei einer Bewegung zumindest teilweise in das weitere Schutzhaubenelement 60a hineinbewegbar. Das weitere Schutzhaubenelement 60a umfasst vorzugsweise zumindest einen Absauganschlussstutzen 62a zu einer Verbindung mit einer externen Absaugvorrichtung (hier nicht näher dargestellt). Insbesondere sind/ist zumindest das Schutzhaubenelement 58a und/oder zumindest ein am Schutzhaubenelement 58a angeordnetes Anlageelement 64a der Schutzhaubeneinheit 52a dazu vorgesehen, zumindest teilweise an einer Werkstückoberfläche eines zu bearbeitenden Werkstücks (hier nicht näher dargestellt) anzuliegen. Vorzugsweise erstrecken/erstreckt sich zumindest das Schutzhaubenelement 58a und/oder zumindest das Anlageelement 64a in zumindest einem Zustand zumindest teilweise über die Auflagefläche 50a der Auflageeinheit 16a hinweg (Figur 5). Das Anlageelement 64a erstreckt sich entlang einer Bewegungsrichtung des Schutzhaubenelements 58a in zumindest einem Zustand zumindest teilweise über einen Begrenzungsrand des Schutzhaubenelements 58a hinweg, wobei der Begrenzungsrand zumindest teilweise eine Werkzeugaustrittsöffnung des Schutzhaubenelements 58a begrenzt (Figuren 5 und 7). Es ist denkbar, dass sich das Anlageelement 64a teilweise oder vollständig entlang des zumindest im Wesentlichen gesamten Begrenzungsrands des Schutzhaubenelements 58a erstreckt. Das Anlageelement 64a kann beweglich an dem Schutzhaubenelement 58a gelagert sein oder zumindest im Wesentlichen ortsfest an dem Schutzhaubenelement 58a fixiert sein. Vorzugsweise ist das Anlageelement 64a federelastisch ausgebildet ist. Die Schutzhaubeneinheit 52a umfasst zumindest ein Federelement 66a, 68a, das dazu vorgesehen ist, zumindest das Schutzhaubenelement 58a und/oder das Anlageelement 64a mit einer Federkraft zu beaufschlagen (Figur 6).

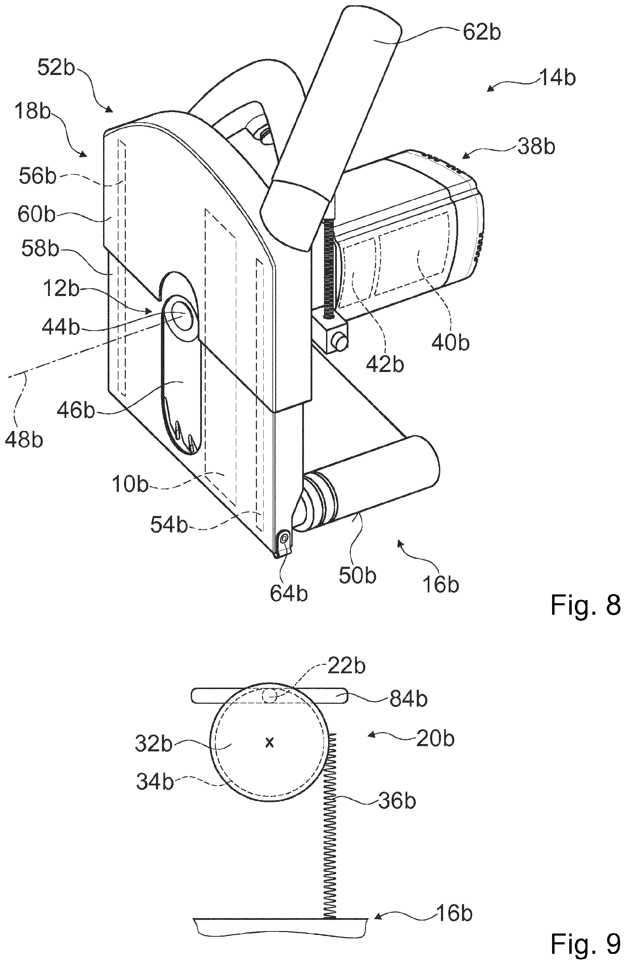

In den Figuren 8 und 9 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 und 9 ist der Buchstabe a durch den Buchstaben b ersetzt.

Figur 8 zeigt eine Werkzeugmaschine 14b, die zumindest eine Werkzeugeinheit 12b, zumindest eine Auflageeinheit 16b und zumindest eine Werkzeugmaschinenvorrichtung 10b umfasst, die zumindest eine Führungseinheit 18b und zumindest eine Übersetzungseinheit 20b umfasst. Die Werkzeugmaschine 14b ist als tragbare Werkzeugmaschine ausgebildet. Die Werkzeugmaschine 14b weist eine zumindest im Wesentlichen analoge Ausgestaltung zu der in der Beschreibung zu den Figuren 1 bis 7 beschriebenen Werkzeugmaschine 14a auf. Die Werkzeugmaschinenvorrichtung 10b der in Figur 8 dargestellten Werkzeugmaschine 14b weist im Unterschied zur Werkzeugmaschinenvorrichtung 10a der in den Figuren 1 bis 7 dargestellten Werkzeugmaschine 14a die Übersetzungseinheit 20b auf, die als Exzentereinheit ausgebildet ist.

Die Übersetzungseinheit 20b weist zumindest ein Hebelelement 22b auf, das von einem exzentrisch an einem Drehelement 32b der Übersetzungseinheit 20b angeordneten Fortsatz gebildet ist (Figur 9). Das Drehelement 32b kann drehbar an einer Gehäuseeinheit 38b der Werkzeugmaschine 14b gelagert sein oder drehbar an einem ortsfest an der Auflageeinheit 16b angeordneten Aufnahmeelement (hier nicht näher dargestellt) der Übersetzungseinheit 20b gelagert sein. Der Fortsatz ist exzentrisch zu einer Drehachse des Drehelements 32b angeordnet. Der Fortsatz ist dazu vorgesehen, in eine korrespondierend zum Fortsatz ausgebildete Bewegungsausnehmung 84b einzugreifen. Die Bewegungsausnehmung 84b kann als Nut, als durchgehende Ausnehmung o. dgl. ausgebildet sein. Die Bewegungsausnehmung 84b ist in Abhängigkeit von einer Anordnung des Drehelements 32b an der Gehäuseeinheit 38b oder an dem Aufnahmeelement angeordnet. Die Bewegungsausnehmung 84b ist insbesondere schlitzförmig ausgebildet. Vorzugsweise weist die Bewegungsausnehmung 84b entlang einer Bewegungsverlaufsachse der Bewegungsausnehmung 84b eine größere Erstreckung auf als entlang einer zumindest im Wesentlichen quer zur Bewegungsverlaufsachse verlaufenden Richtung. Vorzugsweise weist die Bewegungsausnehmung 84b die Bewegungsverlaufsachse auf, die zumindest im Wesentlichen quer zu einer Auflagefläche 50b der Auflageeinheit 16b verläuft, insbesondere relativ zu dieser abgewinkelt ist. Vorzugsweise ist mittels eines Zusammenwirkens des Fortsatzes und der Bewegungsausnehmung 84b eine Bewegung der an der Gehäuseeinheit 38b angeordneten Werkzeugeinheit 12b und/oder der Gehäuseeinheit 38b relativ zur Auflageeinheit 16b hervorrufbar.

Die Übersetzungseinheit 20b weist zumindest ein Federelement 36b auf, das dazu vorgesehen, zumindest das Hebelelement 22b der Übersetzungseinheit 20b mit einer Federkraft zu beaufschlagen. Das Federelement 36b ist insbesondere mit einem Ende am Drehelement 32b fixiert. Mit einem weiteren Ende ist das Federelement 36b vorzugsweise an der Auflageeinheit 16b fixiert. Die Übersetzungseinheit 20b weist zumindest das beweglich gelagerte Drehelement 32b auf, das eine umfänglich verlaufende Führungsbahn 34b zur Führung des Federelements 36b der Übersetzungseinheit 20b aufweist. Das Federelement 36b umschlingt in zumindest einem Zustand zumindest teilweise einen Außenumfang des beweglich gelagerten Drehelements 32b der Übersetzungseinheit 20b. Hinsichtlich weiterer Merkmale und Funktionen der in Figuren 8 und 9 dargestellten Werkzeugmaschine 14b und der Werkzeugmaschinenvorrichtung 10b darf auf die in der Beschreibung der Figuren 1 bis 7 beschriebene Werkzeugmaschine 14a und Werkzeugmaschinenvorrichtung 10a verwiesen werden.

### Bezugszeichen

- 10: Werkzeugmaschinenvorrichtung
- 12: Werkzeugeinheit
- 14: Werkzeugmaschine
- 16: Auflageeinheit
- 18: Führungseinheit
- 20: Übersetzungseinheit
- 22: Hebelelement
- 24: Hebelelement
- 26: Bewegungsachse
- 28: Längserstreckung
- 30: Längserstreckung
- 32: Drehelement
- 34: Führungsbahn
- 36: Federelement
- 38: Gehäuseeinheit
- 40: Antriebseinheit
- 42: Getriebeeinheit
- 44: Werkzeugaufnahme
- 46: Einsatzwerkzeug
- 48: Rotationsachse
- 50: Auflagefläche
- 52: Schutzhaubeneinheit
- 54: Führungselement
- 56: Führungselement
- 58: Schutzhaubenelement
- 60: Schutzhaubenelement
- 62: Absauganschlussstutzen
- 64: Anlageelement
- 66: Federelement
- 68: Federelement
- 70: Ende
- 72: Ende
- 74: Ende
- 76: Ende
- 78: Anschlagfortsatz
- 80: Anschlagelement
- 82: Führungsachse
- 84: Bewegungsausnehmung

## Patentansprüche

1. Werkzeugmaschinenvorrichtung, insbesondere Handwerkzeugmaschinenvorrichtung, zu einer Unterstützung einer Bewegung, insbesondere einer Hubbewegung, einer Werkzeugeinheit (12a; 12b) einer Werkzeugmaschine (14a; 14b) relativ zu einer Auflageeinheit (16a; 16b) der Werkzeugmaschine (14a; 14b), mit zumindest einer Führungseinheit (18a; 18b), insbesondere einer Linearführungseinheit, zu einer Führung der Werkzeugeinheit (12a; 12b) bei einer Bewegung relativ zur Auflageeinheit (16a; 16b), **gekennzeichnet durch** zumindest eine Übersetzungseinheit (20a; 20b), die dazu vorgesehen ist, zumindest in Abhängigkeit von einer Bewegungsstrecke der Werkzeugeinheit (12a; 12b) relativ zur Auflageeinheit (16a; 16b) zumindest eine Kraftübersetzung zu ändern.

2. Werkzeugmaschinenvorrichtung nach Anspruch 1, **dadurch gekennzeichnet, dass** die Übersetzungseinheit (20a; 20b) zumindest ein beweglich gelagertes Hebelelement (22a, 24a; 22b) aufweist, das dazu vorgesehen ist, zumindest in Abhängigkeit von einer Bewegungsstrecke der Werkzeugeinheit (12a; 12b) relativ zur Auflageeinheit (16a; 16b) zumindest eine Kraftübersetzung zu ändern.

3. Werkzeugmaschinenvorrichtung nach Anspruch 1 oder 2, **dadurch gekennzeichnet, dass** die Übersetzungseinheit (20a) zumindest zwei beweglich gelagerte Hebelelemente (22a, 24a) aufweist, die zumindest eine gemeinsame Bewegungsachse (26a) aufweisen.

4. Werkzeugmaschinenvorrichtung nach einem der vorhergehenden Ansprüche, **dadurch gekennzeichnet, dass** die Übersetzungseinheit (20a) zumindest zwei Hebelelemente (22a, 24a) aufweist, die unterschiedliche maximale Längserstreckungen (28a, 30a) aufweisen.

5. Werkzeugmaschinenvorrichtung zumindest nach Anspruch 1 oder 2, **dadurch gekennzeichnet, dass** die Übersetzungseinheit (20b) zumindest ein Hebelelement (22b) aufweist, das von einem exzentrisch an einem Drehelement (32b) der Übersetzungseinheit (20b) angeordneten Fortsatz gebildet ist.

6. Werkzeugmaschinenvorrichtung zumindest nach Anspruch 1 oder 2, **dadurch gekennzeichnet, dass** die Übersetzungseinheit (20b) zumindest ein beweglich gelagertes Drehelement (32b) aufweist, das eine umfänglich verlaufende Führungsbahn (34b) zur Führung eines Federelements (36b) der Übersetzungseinheit (20b) aufweist.

7. Werkzeugmaschinenvorrichtung nach einem der vorhergehenden Ansprüche, **dadurch gekennzeichnet, dass** die Übersetzungseinheit (20a; 20b) zumindest ein Federelement (36a; 36b) aufweist, das dazu vorgesehen ist, zumindest ein Hebelelement (22a, 24a; 22b) der Übersetzungseinheit (20a; 20b) mit einer Federkraft zu beaufschlagen.

8. Werkzeugmaschinenvorrichtung nach Anspruch 7, **dadurch gekennzeichnet, dass** das Federelement (36a; 36b) eine lineare oder eine progressive Federkennlinie aufweist.

9. Werkzeugmaschinenvorrichtung zumindest nach Anspruch 6 oder 7, **dadurch gekennzeichnet, dass** das Federelement (36b) in zumindest einem Zustand zumindest teilweise einen Außenumfang eines beweglich gelagerten Drehelements (32b) der Übersetzungseinheit (20b) umschlingt.

10. Werkzeugmaschinenvorrichtung nach einem der vorhergehenden Ansprüche, **dadurch gekennzeichnet, dass** die Übersetzungseinheit (20a; 20b) als Kniehebeleinheit oder als Exzentereinheit ausgebildet ist.

11. Werkzeugmaschine, insbesondere tragbare Werkzeugmaschine, mit zumindest einer Werkzeugeinheit (12a; 12b), mit zumindest einer Auflageeinheit (16a; 16b) und mit zumindest einer Werkzeugmaschinenvorrichtung nach einem der vorhergehenden Ansprüche.
